# EUROPÄISCHE PATENTSCHRIFT

(11) **EP 1 442 831 B1**
(45) Veröffentlichungstag und Bekanntmachung des Hinweises auf die Patenterteilung: **29.03.2006**
(21) Anmeldenummer: 03028864.1
(22) Anmeldetag: 16.12.2003
(51) Int. Cl.: B23P 19/08, F16C 11/06

(54) **Verfahren und Vorrichtung zur Befestigung eines Dichtungsbalges an einem Kugelgelenk**
Method and device for securing a sealing boot on a ball and socket joint
Procédé et dispositif de fixation d'un soufflet d'étanchéité sur un joint à rotule

(30) Priorität: 30.01.2003 DE 10303898
(43) Veröffentlichungstag der Anmeldung: 04.08.2004
(73) Patentinhaber: Sachsenring Zwickau AG, 08058 Zwickau (DE)
(72) Erfinder: Richter, Jürgen, 08427 Fraureuth (DE); Schubert, Frank, 08058 Zwickau (DE)
(74) Vertreter: Rumrich, Gabriele

(56) Entgegenhaltungen:
- FR-A- 2 597 772
- US-A- 5 457 865
- PATENT ABSTRACTS OF JAPAN vol. 2002, no. 06, 4. Juni 2002 (2002-06-04) -& JP 2002 048128 A (SANYO MACH WORKS LTD), 15. Februar 2002 (2002-02-15)
- PATENT ABSTRACTS OF JAPAN vol. 005, no. 158 (M-091), 12. Oktober 1981 (1981-10-12) -& JP 56 086267 A (ATSUGI MOTOR PARTS CO LTD), 13. Juli 1981 (1981-07-13)

## Beschreibung

Die Erfindung betrifft ein Verfahren und eine Vorrichtung zur Befestigung eines Dichtungsbalges an einem Kugelgelenk, welches einen Kugelzapfen sowie ein Gehäuse zur Aufnahme einer beweglich gelagerten Kugel des Kugelzapfens aufweist, wobei der zwischen dem Gehäuse und dem Kugelzapfen angeordnete Dichtungsbalg mittels Spannringen mit einem ersten Dichtungsbalgrand an dem Schaft des Kugelzapfens und mit einem zweiten Dichtungsbalgrand an dem Gehäuse befestigbar ist. Siehe, zum Beispiel, JP 2002 048 128.

In der DE 197 54 433 A1 wird ein Verfahren zum Zusammenbau von Kugelgelenken offenbart, bei dem der Dichtungsbalg mit seinem einen Ende bereits am Gehäuse befestigt ist, während auf das andere, zapfenseitige, Ende des Dichtungsbalges (oder auf die Kugel des Kugelzapfens) ein Schmiermittel aufgetragen wird. Danach werden Kugelzapfen und Gehäuse so übereinander angeordnet, dass die Kugel des Kugelzapfens in Richtung auf die Öffnung des Gehäuses mit dem dort angebrachten Dichtungsbalg gerichtet ist. Durch Pressen von Kugelzapfen und Gehäuse mit einer vorbestimmten Geschwindigkeit relativ zueinander wird die Kugel durch die zapfenseitige Öffnung des Dichtungsbalges in das Gehäuse eingeführt und das zapfenseitige Ende des Dichtungsbalges am Schaft des Kugelzapfens befestigt.

Ein großer Nachteil dieses Verfahrens ist die Abhängigkeit von der Geschwindigkeit, mit der Kugelzapfen und Gehäuse mit Dichtungsbalg aufeinander gepresst werden. Bei zu geringer Geschwindigkeit gelingt es nicht, die Kugel durch die verhältnismäßig kleine Öffnung des zapfenseitigen Endes des Dichtungsbalges zu schieben. Auch kann es beim Pressen der Kugel durch die Öffnung leicht zu Beschädigungen des Dichtungsbalges kommen.

In der DE 36 41 030 C1 wird eine Befestigung und eine Vorrichtung zur Befestigung eines Dichtungsbalges an dem Gelenkgehäuse eines Kugelgelenks beschrieben, bei der in einer Vormontage der an seinem gehäuseseitigen Balgrand mit einem Haltering versehene Dichtungsbalg auf das Kugelgelenk aufgeschoben und mit seinem schaftseitigen Balgrand auf dem Kugelzapfen befestigt wird. Die Vorrichtung weist einen Arbeitsstempel auf, über den der Haltering axial zusammengedrückt wird, wodurch sein Innendurchmesser verringert wird und damit ein Anpressen des Dichtungsbalgrandes an das Gehäuse des Kugelgelenks erfolgt. Diese Art der Befestigung ist zwar nicht von der Pressgeschwindigkeit abhängig und bringt auch eine größere Montagesicherheit, zeigt aber ein äußerst aufwändiges Verfahren für den Zusammenbau des Kugelgelenks. Die Vorrichtung dient im Grunde nur der endgültigen Befestigung des gehäuseseitigen Dichtungsbalgrandes des vorher schon auf dem Kugelgelenk montierten Dichtungsbalges.

Eine einfache Art der Montage derartiger Kugelgelenke ist die ebenfalls übliche Methode, den Dichtungsbalg vor seiner Anbringung an dem Kugelgelenk manuell umzustülpen und mit Spannringen zu versehen. Der so vormontierte Dichtungsbalg wird auf den Kugelzapfen des Kugelgelenks aufgesteckt. Auf Höhe einer der Aufnahme des gehäuseseitigen Dichtungsbalgrandes dienenden Gehäusenut wird mit einem glockenförmigen Werkzeug von oben auf den umgestülpten Dichtungsbalgrand ein Druck ausgeübt, so dass dieser in seine ursprüngliche Lage zurückschnellt und dabei mit der Gehäusenut in Eingriff kommt.

Diese Methode der Befestigung eines Dichtungsbalges an einem Kugelgelenk ist aber nicht für alle Arten von Dichtungsbalgen einsetzbar. So lassen sich manche Dichtungsbalge auf Grund ihrer Form nur sehr schwer manuell umstülpen bzw. sind mit dem hier beschriebenen Verfahren nicht wieder zurückstülpbar. Auch ist bei dieser Art der Befestigung keine sichere Anordnung des Dichtungsbalgsitzes in der Gehäusenut gewährleistet.

Aufgabe der Erfindung ist es, ein Verfahren und eine Vorrichtung zur Befestigung eines Dichtungsbalges an einem Kugelgelenk zu schaffen, die eine einfache und schnelle Durchführung der Montage bei einer hohen Sicherheit und

Zuverlässigkeit der Abdichtung gewährleisten und zudem keine Stülpung des Dichtungsbalges vor oder/und während der Montage erfordern.

Die Aufgabe wird erfindungsgemäß mit den kennzeichnenden Merkmalen des 1. und 7. Patentanspruchs gelöst. Verfahrensgemäß wird der Dichtungsbalg mit seinem gehäuseseitigen Dichtungsbalgrand auf ein Spreizelement aufgesetzt und danach ein Spannwerkzeug über den sich auf dem Spreizelement befindenden Dichtungsbalg gefahren, dann wird der gehäuseseitige Dichtungsbalgrand gespreizt und gespannt und anschließend in dem Spannwerkzeug ein den Dichtungsbalg aufweitendes Vakuum erzeugt, schließlich wird das Spannwerkzeug bei wieder gelöstem Spreizelement aber mit dem gespannten und aufgeweiteten Dichtungsbalg über dem zu montierenden Kugelgelenk positioniert und in einer definierten Stellung des Spannwerkzeugs die Spannung und das Vakuum aufgehoben, wodurch der gehäuseseitige Dichtungsbalgrand am Gehäuse und gleichzeitig der schaftseitige Dichtungsbalgrand am Kugelzapfen zur Anlage kommt. Das Spannwerkzeug wird dabei aus Richtung des schaftseitigen Dichtungsbalgrandes über den auf dem Spreizelement aufsitzenden Dichtungsbalg gefahren, bis sich das Spreizelement, der gehäuseseitige Dichtungsbalgrand und das dichtungsbalgseitige Ende des Spannwerkzeuges auf einer gemeinsamen radialen Ebene befinden. Durch ein Aufspreizen des Spreizelementes wird der gehäuseseitige Dichtungsbalgrand an die Innenkontur des Spannwerkzeuges gepresst und anschließend mittels Spannwerkzeug gegen einen umlaufenden Rand des Spannwerkzeuges gespannt.

Durch das zusätzliche Erzeugen des Vakuums, in dem Spannwerkzeug wird der Dichtungsbalg mit seiner Außenkontur an die Innenkontur des Spannwerkzeuges gepresst. In der gespannten und aufgeweiteten Endstellung des Dichtungsbalges wird das Spreizelement wieder von der Innenkontur des gehäuseseitigen Dichtungsbalgrandes gelöst. Das Spannwerkzeug wird mit dem gespannten und aufgeweiteten Dichtungsbalg so über dem Kugelgelenk positioniert, dass der Kugelzapfen zuerst durch den gehäuseseitigen Dichtungsbalgrand und anschließend durch den schaftseitigen Dichtungsbalgrand hindurch in das Innere des Spannwerkzeuges geschoben wird, wobei bei Erreichen einer definierten Höhe, bei der sich der Dichtungsbalgrand und eine komplementäre Nut des Gehäuses auf einer gemeinsamen radialen Ebene befinden, die Spannung des Dichtungsbalges und das Vakuum aufgehoben werden, wodurch der gehäuseseitige Dichtungsbalgrand in die Nut des Gehäuses eingreift und gleichzeitig der schaftseitige Dichtungsbalgrand am Kugelzapfen zur Anlage kommt.

Die erfindungsgemäße Vorrichtung weist ein Spreizelement zur Aufnahme und Spreizung des gehäuseseitigen Dichtungsbalgrandes sowie ein relativ zu diesem bewegliches Spannwerkzeug auf, wobei das Spannwerkzeug sowohl über dem auf dem Spreizelement aufsitzenden Dichtungsbalg als auch über dem zu montierenden Kugelgelenk positionierbar ist und einen der Aufnahme des Dichtungsbalges und zumindest der teilweisen Aufnahme des Kugelgelenks dienenden Hohlraum besitzt, in dem ein Vakuum einstellbar ist und das Spannwerkzeug mit dem gehäuseseitigen Dichtungsbalgrand in einer diesen spannenden oder lösenden Wirkverbindung steht. Dabei fallen in der auf dem Dichtungsbalg aufgesetzten Stellung des Spannwerkzeuges die Mittelachsen von Spannwerkzeug und Dichtungsbalg zusammen und das Spreizelement, der gehäuseseitige Dichtungsbalgrand und das dichtungsbalgseitige Ende des Spannwerkzeuges befinden sich auf einer gemeinsamen radialen Ebene.

Das Spannwerkzeug weist einen Niederhalter und ein von diesem aufgenommenes Spannteil auf, welches aus einer an der Innenkontur einer in axialer Richtung verlaufenden Durchgangsöffnung des Niederhalters anliegenden Hülse sowie einem sich in Richtung zum aufzunehmenden Dichtungsbälg hin anschließenden, in einer Erweiterung der Durchgangsöffnung aufgenommenen Spannkopf besteht. Der Spannkopf weist einen Konus auf, der mit seinem kleinsten Durchmesser an die Hülse und mit seinem größten Durchmesser an einen koaxial zur Hülse verlaufenden, zum dichtbalgseitigen Ende des Niederhalters gerichteten Zylinder grenzt.

In der gespannten Stellung des Spannwerkzeuges umgreift der Spannkopf den Dichtungsbalg in axialer Richtung, wobei der Zylinder an dem gehäuseseitigen Dichtungsbalgrand klemmend anliegt. In der gespreizten Stellung liegt das Spreizelement an der Innenkontur des gehäuseseitigen Dichtungsbalgrandes an, während es bei durch das Spannwerkzeug gespanntem gehäuseseitigen Dichtungsbalgrand eine von dessen Innenkontur beabstandete Stellung einnimmt. Im gespannten Zustand und bei zwischen Spannteil und

Dichtungsbalg vorhandenem Vakuum liegt der Dichtungsbalg mit seiner Außenkontur an dem Zylinder und zumindest teilweise an dem Konus des Spannkopfes an.

In der sich über dem Kugelgelenk befindenden Endstellung des Spannwerkzeuges reicht der Kugelzapfen mit seinem außerhalb des Dichtungsbalges befindlichen Schaft in den Hohlraum der Hülse, und eine an dem Gehäuse angeordnete, radial umlaufende Nut befindet sich auf einer gemeinsamen Ebene mit dem gehäuseseitigen Dichtungsbalgrand.

Das erfindungsgemäße Verfahren und die erfindungsgemäße Vorrichtung werden nachstehend an einem Ausführungsbeispiel näher erläutert.

Es zeigen in schematischer Darstellung:

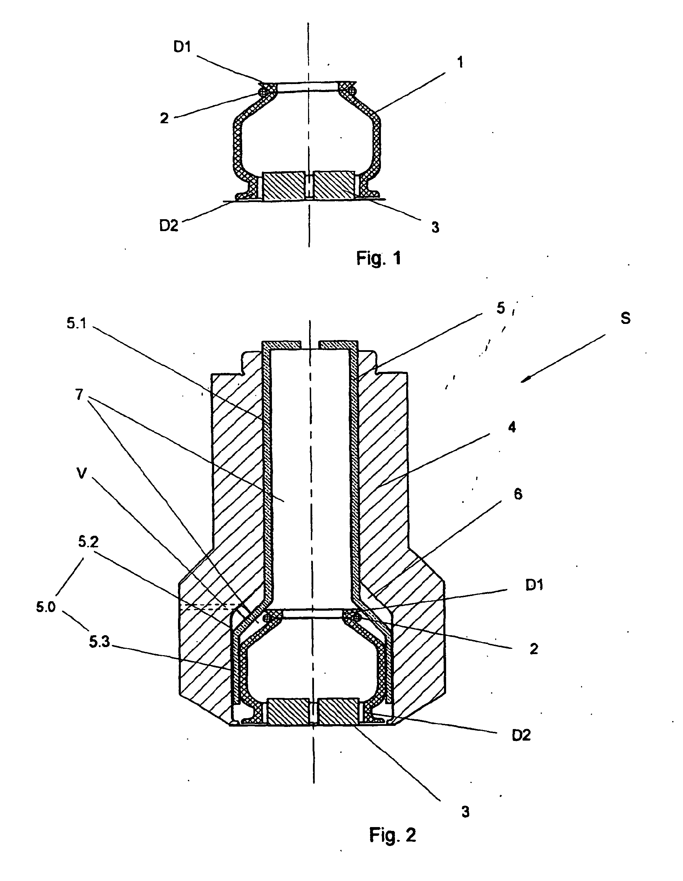

- Fig. 1:: Dichtungsbalg auf dem Spreizelement,
- Fig. 2:: Dichtungsbalg auf dem Spreizelement mit aufgesetztem Spannwerkzeug,

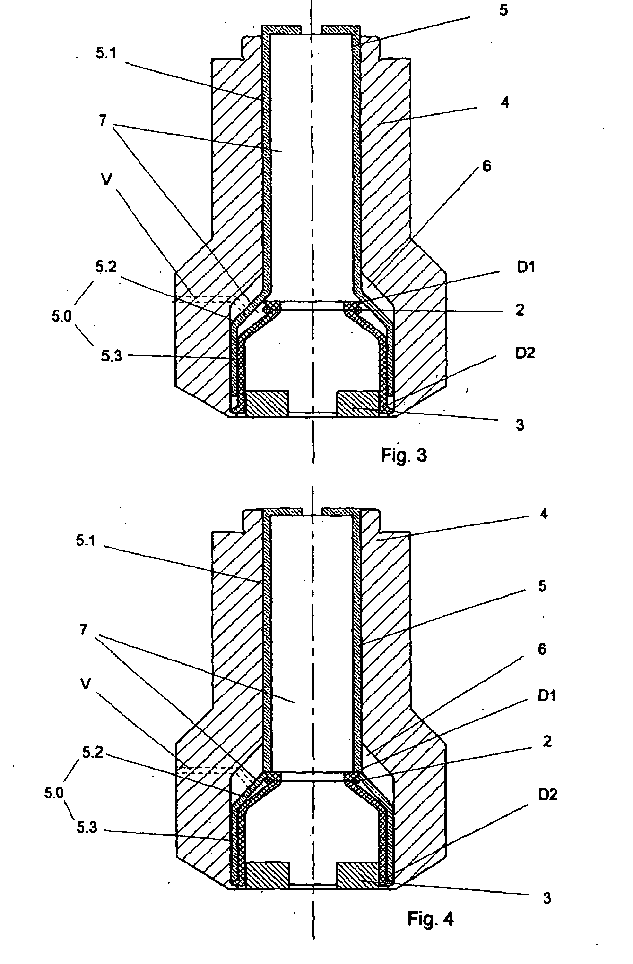

- Fig. 3:: Aufgespreizter Dichtungsbalg in dem Spannteil des Spannwerkzeuges,
- Fig. 4:: Gespannter und evakuierter Zustand des Dichtungsbalges in dem Spannwerkzeug,

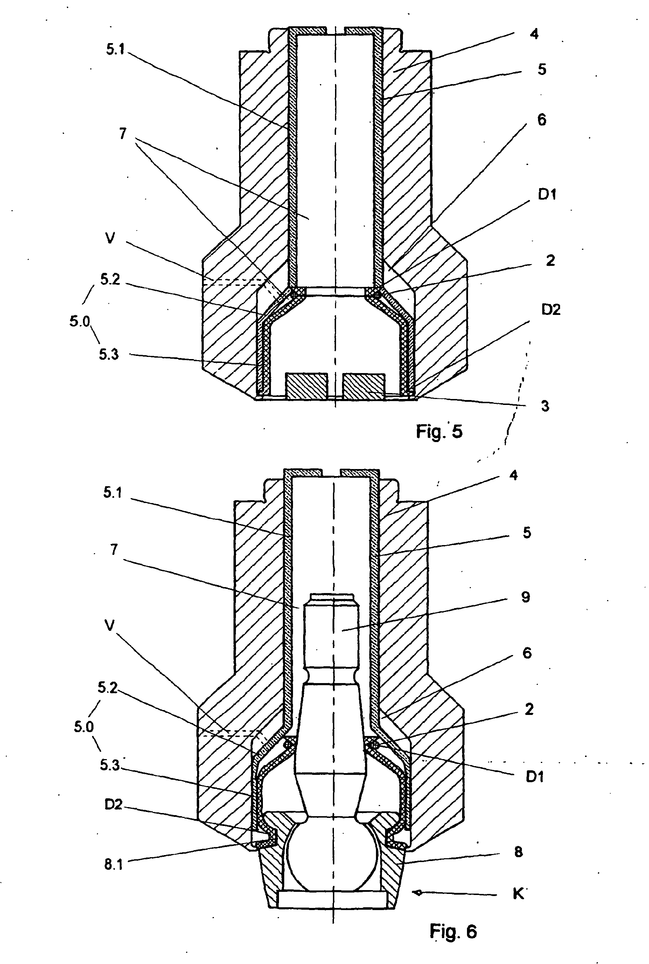

- Fig. 5:: Geöffnetes Spreizelement bei gespanntem und evakuiertem Zustand des Dichtungsbalges,
- Fig. 6:: Aufsetzen des Spannwerkzeuges mit dem Dichtungsbalg auf dem Kugelgelenk,

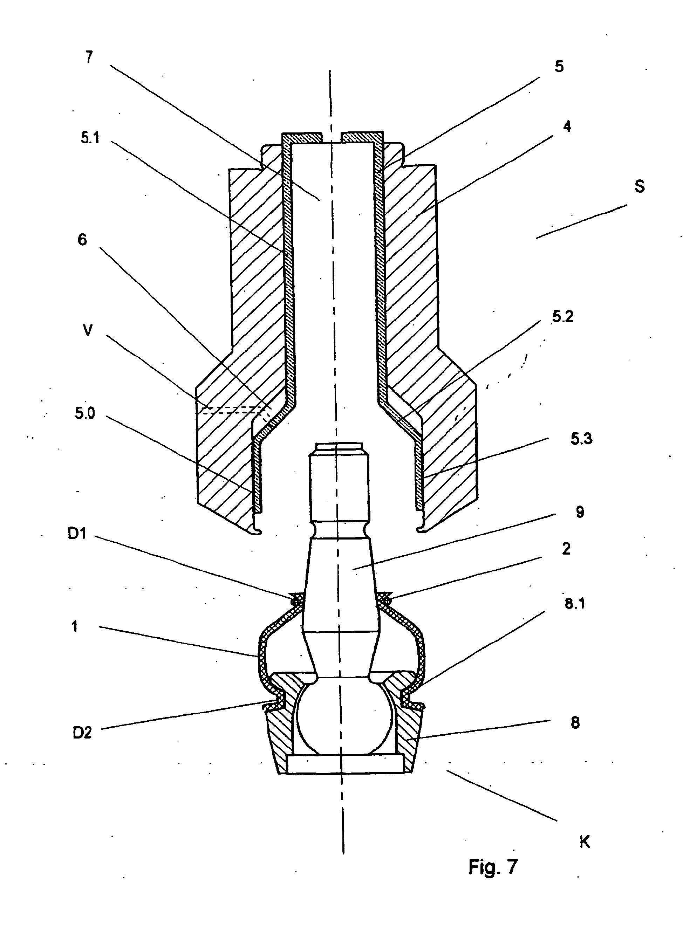

- Fig. 7:: Abheben des Spannwerkzeuges vom fertig montierten Kugelgelenk.

Ein üblicherweise für die Abdichtung von Kugelgelenken, beispielsweise im Fahrzeugbau, verwendeter Dichtungsbalg 1 wird an seinem schaftseitigen Dichtungsbalgrand D1 in einer Vormontage mit einem Spannring 2 versehen.

Das kann automatisch mittels eines hier nicht näher erwähnten Verfahrens geschehen. Der an seinem schaftseitigen Dichtungsbalgrand D1 mit dem vormontierten Spannring 2 versehene Dichtungsbalg 1 wird nun auf ein Spreizelement 3 eines hier ebenfalls nicht näher dargestellten Haltewerkzeuges aufgesetzt, so, dass der gehäuseseitige Dichtungsbalgrand D2 sich auf Höhe des Spreizelementes 3 befindet. Dann wird über den Dichtungsbalg 1 ein Spannwerkzeug S gefahren, das einen Niederhalter 4 und ein Spannteil 5 aufweist. Dabei besteht das in dem Niederhalter 4 angeordnete Spannteil 5 aus einer Hülse 5.1 sowie einem sich in Richtung zum Dichtungsbalg 1 hin anschließenden, mit einer Vergrößerung des Innendurchmessers einhergehenden, Spannkopf 5.0. Letzterer weist einen sich unmittelbar an die Hülse 5.1 anschließenden Konus 5.2 auf, dessen kleinster Durchmesser an die Hülse 5.1 grenzt.

An das andere, den größten Durchmesser aufweisende, Ende des Konus 5.2 schließt sich ein koaxial zur Hülse 5.1 verlaufender, zum dichtbalgseitigen Ende des Spannwerkzeuges S gerichteter Zylinder 5.3 an. Dabei liegt die Hülse 5.1 mit ihrer Außenkontur an der Innenkontur des mit einer komplementären Durchgangsöffnung 6 versehenen Niederhalters 4 an, die in Richtung Dichtungsbalg 1 in eine erweiterte, den Spannkopf 5.0 aufnehmende Ausnehmung übergeht. Das Spannteil 5 weist ebenfalls einen Hohlraum 7 auf, der innerhalb des Spannkopfes 5.0 eine analoge Erweiterung zeigt. Während der Spannkopf 5.0 mit seinem Zylinder 5.3 an der Innenkontur des Niederhalters 4 anliegt, verläuft der Konus 5.2 beabstandet von der zuordenbaren Innenkontur des Niederhalters 4. Über einen an dem Konus 5.2 des Spannkopfes 5.0 vorhandenen - in der Zeichnung nur angedeuteten - Druckmittelanschluss V kann ein Vakuum in dem sich zwischen Dichtungsbalg 1 und dem Spannteil 5 befindenden Hohlraum 7 hergestellt werden. Nachdem sich das Spannwerkzeug S so über dem auf dem Spreizelement 3 angeordneten Dichtungsbalg 1 befindet, dass die Mittelachsen von Spannwerkzeug S und Dichtungsbalg 1 zusammenfallen und das Spreizelement 3, der gehäuseseitige Dichtungsbalgrand D2 und das dichtungsbalgseitige Ende des Spannwerkzeuges S sich auf einer gemeinsamen radialen Ebene befinden, beginnt ein mechanisches Aufspreizen des Dichtungsbalges 1 an seinem gehäuseseitigen Dichtungsbalgrand D2, indem das Spreizelement 3 gegen die Innenkontur des Dichtungsbalgrandes D2 und diesen gegen die Innenkontur des Zylinders 5.3 des Spannkopfes 5.0 drückt. In dieser Stellung erfolgt über das Spannteil 5 eine axiale Vorspannung des Dichtungsbalges 1, indem das dichtungsbalgseitige Ende der Hülse 5.1 gegen den schaftseitigen Dichtungsbalgrand D1 gedrückt wird. Dann findet eine mechanische Klemmung des gehäuseseitigen Dichtungsbalgrandes D2 durch den Zylinder 5.3 und gleichzeitige werkzeugseitige Abdichtung statt. Durch anschließendes - hier nicht näher dargestelltes -

Evakuieren des sich zwischen Spannteil 5 und Dichtungsbalg 1 befindenden Hohlraums 7 und dem sich dadurch bildenden Vakuum wird die Außenkontur des Dichtungsbalges 1 an die Innenkontur des durch die Hülse 5.2 und den Konus 5.3 gebildeten Spannkopf 5.0 des Spannteiles 5 gesaugt, was zu einer maximalen Aufweitung des Dichtungsbalges 1 führt. Bei dem derart gespannten und aufgeweiteten Dichtungsbalg 1 wird nun die Spreizung geöffnet, das heißt, das Spreizelement 3 wird von dem gehäuseseitigen Dichtungsbalgrand D2. weg bewegt. Jetzt wird das Spannwerkzeug S mit dem gespannten und aufgeweiteten Dichtungsbalg 1 über das mit der Abdichtung zu versehende Kugelgelenk K, bestehend aus dem Gehäuse 8 und dem Kugelzapfen 9, gefahren. Dabei wird das Spannwerkzeug S so über dem Kugelgelenk K positioniert, dass der Kugelzapfen 9 zuerst durch den gehäuseseitigen Dichtungsbalgrand D2 und anschließend durch den schaftseitigen Dichtungsbalgrand D1 hindurch in den Hohlraum 7 des Spannwerkzeuges S geschoben wird. In einer definierten Stellung, die einem Zusammenfallen der axialen Höhe von gehäuseseitigem Dichtungsbalgrand D2 und einer komplementären, für die Befestigung des Dichtungsbalges 1 vorgesehenen, radial umlaufenden Nut 8.1 des Gehäuses 8 entspricht, werden Einspannung und Vakuum aufgehoben. Der Dichtungsbalg 1 nimmt seine ursprüngliche Form an, wobei der gehäuseseitige Dichtungsbalgrand D2 in die Nut 8.1 des Gehäuses 8 eingreift und der schaftseitige Dichtungsbalgrand D1 am Schaft des Kugelzapfens 9 abdichtend zur Anlage kommt. Damit ist der Dichtungsbalg 1 gleichzeitig auf dem Kugelzapfen 9 und dem Gehäuse 8 montiert. Das Spannwerkzeug S wird angehoben und das fertig montierte Kugelgelenk K kann entnommen werden.

Die erfindungsgemäße Lösung stellt eine einfache und doch sehr sichere und zuverlässige Methode der Befestigung eines Dichtungsbalges an einem Kugelgelenk dar. Es ist nicht nötig - wie im bekannten Stand der Technik - wenigstens einen Dichtungsbalgrand auf dem Kugelgelenk vorzumontieren, oder eine Umstülpung des Dichtungsbalges durchzuführen.

Es wird nur eine Vormontage in der Form durchgeführt, dass ein Spannring auf dem schaftseitigen Dichtungsbalgrand angebracht wird. Die weitere Montage, d.h. die gesamte Anbringung des Dichtungsbalges an dem Kugelgelenk, erfolgt mit wenigen Arbeitsschritten eines Verfahrens und mit einer relativ einfachen Vorrichtung. Einsetzbar sind das erfindungsgemäße Verfahren und die erfindungsgemäße Vorrichtung für ein großes Spektrum von Dichtungsbälgen.

## Patentansprüche

1. Verfahren zur Befestigung eines Dichtungsbalges (1) an einem Kugelgelenk (K), welches einen Kugelzapfen (9) sowie ein Gehäuse (8) zur Aufnahme einer beweglich gelagerten Kugel des Kugelzapfens (9) aufweist, wobei der zwischen dem Gehäuse (8) und dem Kugelzapfen (9) angeordnete Dichtungsbalg (1) mit einem ersten Dichtungsbalgrand (D1) an dem Schaft des Kugelzapfens (9) und mit einem zweiten Dichtungsbalgrand (D2) an dem Gehäuse (8) befestigbar ist, wobei der gehäuseseitige Dichtungsbalgrand (D2) gespreizt wird, **dadurch gekennzeichnet, daß** der Dichtungsbalg an seiner Außenwandung mit einem Vakuum beaufschlagt wird, anschließend der Dichtungsbalg (1) über dem Kugelgelenk (K) positioniert wird und abschließend die Spreizung des gehäuseseitigen Dichtungsbalgrandes (D2) und das Vakuum aufgehoben werden, so dass der gehäuseseitige Dichtungsbalgrand (D2) am Gehäuse (8) zur Anlage kommt.

2. Verfahren nach Anspruch 1, **dadurch gekennzeichnet, dass**
- der Dichtungsbalg (1) mit seinem gehäuseseitigen Dichtungsbalgrand (D2) auf ein Spreizelement (3) aufgesetzt wird,
- danach ein Spannwerkzeug (S) über den sich auf dem Spreizelement (3) befindenden Dichtungsbalg (1) gefahren und
- der gehäuseseitige Dichtungsbalgrand (D2) gespreizt und gespannt wird,
- anschließend in dem Spannwerkzeug (S) ein den Dichtungsbalg (1) aufweitendes Vakuum erzeugt wird,
- dann das Spannwerkzeug (S) bei wieder gelöstem Spreizelement (3), aber mit gespanntem und aufgeweitetem Dichtungsbalg (1), über dem zu montierenden Kugelgelenk (K) positioniert und
- in einer definierten Stellung die Spannung und das Vakuum aufgehoben wird, wodurch der gehäuseseitige Dichtungsbalgrand (D2) am Gehäuse (8) und gleichzeitig der schaftseitige - Dichtungsbalgrand (D1) am Kugelzapfen (9) zur Anlage kommt.

3. Verfahren nach Anspruch 1 oder 2, **dadurch gekennzeichnet, dass** das Spannwerkzeug (S) aus Richtung des schaftseitigen Dichtungsbalgrandes (D1) über den auf dem Spreizelement (3) aufsitzenden Dichtungsbalg (1) gefahren wird, bis sich das Spreizelement (3), der gehäuseseitige Dichtungsbalgrand (D2) und das dichtungsbalgseitige Ende des Spannwerkzeuges (S) auf einer gemeinsamen radialen Ebene befinden.

4. Verfahren nach einem der Ansprüche 1 bis 3, **dadurch gekennzeichnet, dass** durch ein Aufspreizen des Spreizelementes (3) der gehäuseseitige Dichtungsbalgrand (D2) an die Innenkontur des Spannwerkzeuges (S) gepresst und anschließend mittels Spannwerkzeug (S) gegen einen umlaufenden Rand des Spannwerkzeuges (S) vakuumdicht gespannt wird.

5. Verfahren nach einem der Ansprüche 1 bis 4, **dadurch gekennzeichnet, dass** durch das in dem Spannwerkzeug (S) erzeugte Vakuum der Dichtungsbalg (1) mit seiner Außenkontur an die Innenkontur des Spannwerkzeuges (S) gepresst wird.

6. Verfahren nach einem der Ansprüche 1 bis 5, **dadurch gekennzeichnet, dass** das Spannwerkzeug (S) mit dem gespannten und aufgeweiteten Dichtungsbalg (1) so über dem Kugelgelenk (K) positioniert wird, dass der Kugelzapfen (9) zuerst durch den gehäuseseitigen Dichtungsbalgrand (D2) und anschließend durch den schaftseitigen Dichtungsbalgrand (D1) hindurch in das Innere des Spannwerkzeuges (S) geschoben wird, wobei bei Erreichen einer definierten Höhe, bei der sich der Dichtungsbalgrand (D2) und eine komplementäre Nut (8.1) des Gehäuses (8) auf einer gemeinsamen radialen Ebene befinden, die Spannung des Dichtungsbalges (1) und das Vakuum aufgehoben werden, wodurch der gehäuseseitige Dichtungsbalgrand (D2) in die Nut (8.1) des Gehäuses (8) eingreift und gleichzeitig der schaftseitige Dichtungsbalgrand (D1) am Kugelzapfen zur Anlage kommt.

7. Vorrichtung zur Befestigung eines Dichtungsbalges (1) an einem Kugelgelenk (K), welches einen Kugelzapfen (9) sowie ein Gehäuse (8) zur Aufnahme einer beweglich gelagerten Kugel des Kugelzapfens (9) aufweist, wobei der zwischen dem Gehäuse (8) und dem Kugelzapfen (9) angeordnete Dichtungsbalg (1) mit einem ersten Dichtungsbalgrand (D1) an dem Schaft des Kugelzapfens (9) und mit einem zweiten Dichtungsbalgrand (D2) an dem Gehäuse (8) befestigbar ist, wobei ein Spreizelement (3) zur Spreizung des gehäuseseitigen Dichtungsbalgrandes (D2) vorgesehen ist, **dadurch gekennzeichnet, daß** eine Einrichtung zur Erzeugung eines Vakuums auf die Außenseite des Dichtungsbalges vorgesehen sind.

8. Vorrichtung nach Anspruch 7, **dadurch gekennzeichnet, dass** ein Spreizelement (3) zur Aufnahme und Spreizung des gehäuseseitigen Dichtungsbalgrandes (D2) sowie ein relativ zu diesem bewegliches Spannwerkzeug (S) vorgesehen sind, wobei das Spannwerkzeug (S)
- sowohl über dem auf dem Spreizelement (3) aufsitzenden Dichtungsbalg (1) als auch über dem zu montierenden Kugelgelenk (K) positionierbar ist und
- einen der Aufnahme des Dichtuhgsbalges (1) und zumindest der teilweisen Aufnahme des Kugelgelenks (K) dienenden Hohlraum (7) besitzt, in dem ein Vakuum einstellbar ist,
- und mit dem gehäuseseitigen Dichtungsbalgrand (D2) in einer diesen spannenden oder lösenden Wirkverbindung steht.

9. Vorrichtung nach Anspruch 7 und 8, **dadurch gekennzeichnet, dass** in der auf dem Dichtungsbalg (1) aufgesetzten Stellung des Spannwerkzeuges (S) die Mittelachsen von Spannwerkzeug (S) und Dichtungsbalg (1) zusammenfallen und das Spreizelement (3), der gehäuseseitige Dichtungsbalgrand (D2) und das dichtungsbalgseitige Ende des Spannwerkzeuges (S) sich auf einer gemeinsamen radialen Ebene befinden.

10. Vorrichtung nach einem der Ansprüche 7 bis 9, **dadurch gekennzeichnet, dass** das Spannwerkzeug (S) einen Niederhalter (4) und ein von diesem aufgenommenes Spanriteil (5) aufweist, welches aus einer an der Innenkontur einer in axialer Richtung verlaufenden Durchgangsöffnung (6) des Niederhalters (4) anliegenden Hülse (5.1) sowie einem sich in Richtung zum aufzunehmenden Dichtungsbalg (1) hin anschließenden, in einer Erweiterung der Durchgangsöffnung (6) aufgenommenen Spannkopf (5.0) besteht.

11. Vorrichtung nach Anspruch 10, **dadurch gekennzeichnet, dass** der Spannkopf (5.0) aus einem Konus. (5.2) besteht, der mit seinem kleinsten Durchmesser an die Hülse (5.1) und mit seinem größten Durchmesser an einen koaxial zur Hülse (5.1) verlaufenden, zum dichtbalgseitigen Ende des Niederhalters (4) gerichteten Zylinder (5.3) grenzt.

12. Vorrichtung nach Anspruch 10 oder 11, **dadurch gekennzeichnet, dass** in der gespannten Stellung des Spannwerkzeuges (S) der Spannkopf (5.0) den Dichtungsbalg (1) in axialer Richtung umgreift, wobei der Zylinder (5.3) an dem gehäuseseitigen Dichtungsbalgrand (D2) klemmend anliegt.

13. Vorrichtung nach einem der Ansprüche 7 bis 12,
**dadurch gekennzeichnet, dass** das Spreizelement (3) in der gespreizten Stellung an der Innenkontur des gehäuseseitigen Dichtungsbalgrandes (D2) anliegt.

14. Vorrichtung nach einem der Ansprüche 7 bis 12,
**dadurch gekennzeichnet, dass** das Spreizelement (3) bei gespanntem gehäuseseitigen Dichtungsbalgrand (D2) eine von dessen Innenkontur beabstandete Stellung einnimmt.

15. Vorrichtung nach einem der Ansprüche 11 bis 14,
**dadurch gekennzeichnet, dass** im gespannten Zustand und bei zwischen Spannteil (5) und Dichtungsbalg. (1) vorhandenem Vakuum der Dichtungsbalg (1) mit seiner Außenkontur an dem Zylinder (5.3) und zumindest teilweise an dem Konus (5.2) des Spannkopfes (5.0) anliegt.

16. Vorrichtung nach einem der Ansprüche 7 bis 15,
**dadurch gekennzeichnet, dass** in der sich über dem Kugelgelenk (K) befindenden Endstellung des Spannwerkzeuges (S) der Kugelzapfen (9) mit seinem außerhalb des Dichtungsbalges (1) befindlichen Schaft in den Hohlraum (7) der Hülse (5.1) reicht, und eine an dem Gehäuse (8) angeordnete, radial umlaufende Nut (8.1) sich auf einer gemeinsamen Ebene mit dem gehäuseseitigen Dichtungsbalgrand (D2) befindet.

## Claims

1. A method for fastening a sealing bellows (1) to a ball-and-socket-joint (K), comprising a ball pivot (9) and a housing (8) for receiving a movably held ball of the ball pivot (9), with the sealing bellows (1) arranged between the housing (8) and the ball pivot (9) being capable of being fastened with a first sealing bellows edge (D1) to the shaft of the ball pivot (9) and with a second sealing bellows edge (D2) to the housing (8), with the sealing bellows edge (D2) on the housing side being spread, **characterized in that** the sealing bellows is subjected on its outside wall to a vacuum, thereafter the sealing bellows (1) is positioned over the ball-and-socket joint (K) and thereafter the spreading of the sealing bellows edge (D2) on the housing side and the vacuum are ceased, so that the sealing bellows edge (D2) on the housing side comes to rest on the housing (8) .

2. A method according to claim 1, **characterized in that**
- the sealing bellows (1) is placed with its sealing bellows edge (D2) on the housing side on a spreading element (3);
- thereafter a stretching device (S) is driven over the sealing bellows (1) situated on the spreading element (3);
- the sealing bellows edge (D2) on the housing side is spread and stretched;
- thereafter a vacuum is produced in the stretching device (S) which expands the sealing bellows (1);
- the stretching tool (S) is positioned over the ball-and-socket joint (K) to be mounted when the spreading element (3) is released again, but with stretched and expanded sealing bellows (1), and
- the stretching and vacuum are ceased in a defined position, as a result of which the sealing bellows edge (D2) comes to rest on the housing (8) and at the same time the sealing bellows edge (D1) on the shaft side on the ball pivot (9).

3. A method according to claim 1 or 2, **characterized in that** the stretching tool (S) is driven from the direction of the shaft-side sealing bellows edge (D1) over the sealing bellows (1) sitting on the spreading element (3) until the spreading element (3), the sealing bellows edge (D2) on the housing side and the end of the spreading tool (S) on the side of the sealing bellows are situated on a common radial plane.

4. A method according to one of the claims 1 to 3, **characterized in that** by spreading open the spreading element (3) the sealing bellows edge (D2) on the housing side is pressed against the inside contour of the stretching tool (S) and thereafter is stretched in a vacuum-tight manner against a circular edge of the stretching tool (S) by means of the stretching tool.

5. A method according to one of the claims 1 to 4, **characterized in that** as a result of the vacuum produced in the stretching tool (S) the sealing bellows (1) is pressed with its outside contour against the inside contour of the stretching tool (S).

6. A method according to one of the claims 1 to 5, **characterized in that** the stretching tool (S) with the stretched and widened sealing bellows (1) is positioned in such a way over the ball-and-socket joint (K) that the ball pivot (9) is pushed into the interior of the stretching tool (S) at first through the sealing bellows edge (D2) on the housing side and thereafter through the sealing bellows edge (D1) on the shaft side, with the stretching of the sealing bellows (1) and the vacuum being ceased upon reaching a defined height at which the sealing bellows edge (D2) and a complementary groove (8.1) of the housing (8) are situated on a common radial plane, as a result of which the sealing bellows edge (D2) on the housing side engages in the groove (8.1) of the housing (8), and at the same time the sealing bellows edge (D1) on the shaft side comes to rest on the ball pivot.

7. A method for fastening a sealing bellows (1) to a ball-and-socket-joint (K), comprising a ball pivot (9) and a housing (8) for receiving a movably held ball of the ball pivot (9), with the sealing bellows (1) arranged between the housing (8) and the ball pivot (9) being capable of being fastened with a first sealing bellows edge (D1) to the shaft of the ball pivot (9) and with a second sealing bellows edge (D2) to the housing (8), with a spreading element (3) being provided for spreading the sealing bellows edge (D2) on the housing side, **characterized in that** a device for producing a vacuum is provided on the outside of the bellows.

8. An apparatus according to claim 7, **characterized in that** a spreading element (3) is provided for receiving and spreading the sealing bellows edge (D2) on the housing side and a stretching tool (S) which is movable relative to the same, with the stretching tool (S)
- being positionable over the sealing bellows (1) resting on the stretching element (3) and over the ball-and-socket joint (K) to be mounted, and
- comprising a cavity (7) used for receiving the sealing bellows (1) and at least for receiving in part the ball-and-socket joint (K), in which cavity a vacuum can be set, and
- being in operative connection with the sealing bellows edge (D2) on the housing side in order to stretch or release the same.

9. An apparatus according to claim 7 and 8, **characterized in that** in the position of the stretching tool (S) when placed on the sealing bellows (1) the central axes of stretching tool (S) and sealing bellows (1) coincide and the spreading element (3), the sealing bellows edge (D2) on the housing side and the end of the stretching tool (S) on the side of the sealing bellows are situated in a common radial plane.

10. An apparatus according to one of the claims 7 to 9, **characterized in that** the stretching tool (S) comprises a holding-down device (4) and a stretching part (5) which is received by the same, which stretching part consists of a sleeve (5.1) resting on the inside contour of a pass-through opening (6) of the holding-down device (4) extending in the axial direction and a stretching head (5.0) received in an expansion of the pass-through opening (6) and adjacent in the direction towards the sealing bellows (1) to be received.

11. An apparatus according to claim 10, **characterized in that** the stretching head (5.0) consists of a cone (5.2) which is adjacent with its diameter to the sleeve (5.1) and with its largest diameter to a cylinder (5.3) facing towards the end of the holding-down device (4) on the sealing bellows side and extending coaxially to the sleeve (5.1).

12. An apparatus according to claim 10 or 11, **characterized in that** in the stretched position of the stretching tool (S) the stretching head (5.0) overlaps the sealing bellows (1) in the axial direction, with the cylinder (5.3) resting in a clamping manner on the sealing bellows edge (D2) on the housing side.

13. An apparatus according to one of the claims 7 to 12, **characterized in that** the spreading element (3) rests in the spread position on the inside contour of the sealing bellows edge (D2) on the housing side.

14. An apparatus according to one of the claims 7 to 12, **characterized in that** the spreading element (3), when the sealing bellows edge (D2) on the housing side is stretched, assumes a position spaced from its inside contour.

15. An apparatus according to one of the claims 11 to 14,
**characterized in that** in the stretched state and when there is a vacuum between stretching part (5) and sealing bellows (1) the sealing bellows (1) rests with its outside contour on the cylinder (5.3) and at least partly on the cone (5.2) of the stretching head (5.0).

16. An apparatus according to one of the claims 7 to 15,
**characterized in that** in the end position of the stretching tool (S) situated over the ball-and-socket joint (K) the ball pivot (9) reaches with its shaft situated outside of the sealing bellows into the cavity (7) of the tube (5.1), and a radially circular groove (8.1) arranged on the housing (8) is situated on a common plane with the sealing bellows edge (D2) on the housing side.

## Revendications

1. Procédé pour fixer un soufflet d'étanchéité (1) sur une articulation à rotule (K) comportant une rotule (9) ainsi qu'un boîtier (8) destiné à recevoir une sphère montée mobile de la rotule (9), le soufflet d'étanchéité (1) disposé entre le boîtier (8) et la rotule (9) étant apte à être fixé par un premier bord (D1) du soufflet d'étanchéité sur la tige de la rotule (9) et par un deuxième bord (D2) du soufflet d'étanchéité, sur le boîtier (8), le bord (D2) côté boîtier du soufflet d'étanchéité étant soumis à une expansion, **caractérisé en ce que** l'on met sous vide la paroi extérieure du soufflet d'étanchéité, que l'on positionne ensuite le soufflet d'étanchéité (1) par-dessus l'articulation à rotule (K) et que l'on supprime finalement l'expansion du bord (D2) côté boîtier du soufflet d'étanchéité ainsi que le vide de sorte que le bord (D2) côté boîtier du soufflet d'étanchéité vient en appui sur le boîtier (8).

2. Procédé selon la revendication 1, **caractérisé en ce**
- **que** l'on place le soufflet d'étanchéité (1) par son bord (D2) côté boîtier du soufflet d'étanchéité sur un élément d'expansion (3),
- **que** l'on glisse ensuite un outil de serrage (S) par-dessus le soufflet d'étanchéité (1) se trouvant sur l'élément d'expansion (3) et
- **que** l'on fait subir au bord (D2) côté boîtier du soufflet d'étanchéité une expansion et qu'on le serre,
- **que** l'on crée ensuite dans l'outil de serrage (S) un vide qui fait se dilater le soufflet d'étanchéité (1),
- **que** l'on positionne alors l'outil de serrage (S) par-dessus le joint à rotule (K) destiné à être monté après avoir desserré l'élément d'expansion (3), le soufflet d'étanchéité (1) restant serré et dilaté et
- **que**, dans une position définie, l'on supprime le serrage et le vide de sorte que le bord (D2) côté boîtier du soufflet d'étanchéité vient en appui contre le boîtier (8) et qu'en même temps le bord (D1) côté tige du soufflet d'étanchéité vient en appui contre la rotule (9).

3. Procédé selon la revendication 1 ou 2, **caractérisé en ce que** l'on glisse l'outil de serrage (S) par-dessus le soufflet d'étanchéité (1) placé sur l'élément d'expansion (3) en partant du bord (D1) côté tige du soufflet d'étanchéité jusqu'à ce que l'élément d'expansion (3), le bord (D2) côté boîtier du soufflet d'étanchéité et l'extrémité côté soufflet d'étanchéité de l'outil de serrage (S) se situent dans un même plan radial.

4. Procédé selon l'une quelconque des revendications 1 à 3, **caractérisé en ce que**, du fait de l'expansion de l'élément d'expansion (3), le bord (D2) côté boîtier du soufflet d'étanchéité est plaqué contre le contour intérieur de l'outil de serrage (S) et qu'il est ensuite serré sous vide contre un bord périphérique de l'outil de serrage (S) au moyen de l'outil de serrage (S).

5. Procédé selon l'une quelconque des revendications 1 à 4, **caractérisé en ce que**, du fait du vide créé dans l'outil de serrage (S), le soufflet d'étanchéité (1) est plaqué par son contour extérieur contre le contour intérieur de l'outil de serrage (S).

6. Procédé selon l'une quelconque des revendications 1 à 5, **caractérisé en ce que** l'outil de serrage (S) est positionné avec le soufflet d'étanchéité (1) serré et dilaté par-dessus l'articulation à rotule (K) de manière à faire traverser à la rotule (9) d'abord le bord (D2) côté boîtier du soufflet d'étanchéité et ensuite le bord (D1) côté tige du soufflet d'étanchéité jusqu'à l'amener au sein de l'outil de serrage (S), le serrage du soufflet d'étanchéité (1) et le vide étant supprimé dès qu'une hauteur définie à laquelle le bord (D2) du soufflet d'étanchéité et une rainure complémentaire (8.1) du boîtier (8) se situent dans un même plan radial est atteinte, le bord (D2) côté boîtier du soufflet d'étanchéité s'engageant alors dans la rainure (8.1) du boîtier (8) tandis que le bord (D1) côté tige du soufflet d'étanchéité vient en appui contre la rotule.

7. Dispositif destiné à fixer un soufflet d'étanchéité (1) sur une articulation à rotule (K) comportant une rotule (9) ainsi qu'un boîtier (8) destiné à recevoir une sphère montée mobile de la rotule (9), le soufflet d'étanchéité (1) disposé entre le boîtier (8) et la rotule (9) étant apte à être fixé par un premier bord (D1) du soufflet d'étanchéité sur la tige de la rotule (9) et par un deuxième bord (D2) du soufflet d'étanchéité, sur le boîtier (8), un élément d'expansion (3) destiné à faire subir au bord (D2) côté boîtier du soufflet d'étanchéité une expansion étant prévu, **caractérisé en ce qu'**un système destiné à créer un vide sur la face extérieure du soufflet d'étanchéité est prévu.

8. Dispositif selon la revendication 7, **caractérisé en ce que** sont prévus un élément d'expansion (3) destiné à recevoir le bord (D2) côté boîtier du soufflet d'étanchéité et à lui faire subir une expansion ainsi qu'un outil de serrage (S) mobile par rapport à celui-ci, l'outil de serrage (S)
- étant apte à être positionné tant par-dessus du soufflet d'étanchéité (1) placé sur l'élément d'expansion (3) que par-dessus l'articulation à rotule (K) qu'il y a lieu de monter et
- possédant une cavité (7) qui sert à recevoir le soufflet d'étanchéité (1) et du moins partiellement l'articulation à rotule (K) et qui est apte à être mise sous vide,
- et étant relié à, et coopérant avec, le bord (D2) côté boîtier du soufflet d'étanchéité de manière à le maintenir serré ou à le libérer.

9. Dispositif selon la revendication 7 et 8, **caractérisé en ce que**, lorsque l'outil de serrage (S) est dans une position dans laquelle il est placé sur le soufflet d'étanchéité (1), les axes centraux de l'outil de serrage (S) et du soufflet d'étanchéité (1) coïncident et l'élément d'expansion (3), le bord (D2) côté boîtier du soufflet d'étanchéité et l'extrémité côté soufflet d'étanchéité de l'outil de serrage (S) se situent dans un même plan radial.

10. Dispositif selon l'une quelconque des revendications 7 à 9, **caractérisé en ce que** l'outil de serrage (S) comporte un serre-flan (4) et une pièce de serrage (5) reçue par celui-ci, cette pièce de serrage étant constituée par une douille (5.1) en appui contre le contour intérieur d'un trou traversant (6) ménagé dans le serre-flan (4) et s'étendant suivant la direction axiale ainsi que par une tête de serrage (5.0) située dans le prolongement de celle-ci en direction du soufflet d'étanchéité (1) destiné à être reçu et logée dans une partie élargie du trou traversant (6).

11. Dispositif selon la revendication 10, **caractérisé en ce que** la tête de serrage (5.0) est constituée par un cône (5.2) attenant par son plus petit diamètre à la douille (5.1) et par son plus grand diamètre à un cylindre (5.3) s'étendant coaxialement par rapport à la douille (5.1) et dirigé vers l'extrémité du serre-flan (4) tournée du côté du soufflet d'étanchéité.

12. Dispositif selon la revendication 10 ou 11, **caractérisé en ce que**, lorsque l'outil de serrage (S) se trouve en position serrée, la tête de serrage (5.0) emprisonne le soufflet d'étanchéité (1) suivant la direction axiale, le cylindre (5.3) étant en appui serré contre le bord (D2) côté boîtier du soufflet d'étanchéité.

13. Dispositif selon l'une quelconque des revendications 7 à 12, **caractérisé en ce que**, en position d'expansion, l'élément d'expansion (3) est en appui contre le contour intérieur du bord (D2) côté boîtier du soufflet d'étanchéité.

14. Dispositif selon l'une quelconque des revendications 7 à 12, **caractérisé en ce que**, lorsque le bord (D2) côté boîtier du soufflet d'étanchéité est serré, l'élément d'expansion (3) adopte une position dans laquelle il est situé à distance du contour intérieur.

15. Dispositif selon l'une quelconque des revendications 11 à 14, **caractérisé en ce que**, à l'état serré et lorsque l'espace entre la pièce de serrage (5) et le soufflet d'étanchéité (1) est sous vide, le soufflet d'étanchéité (1) est en appui par son contour extérieur contre le cylindre (5.3) et du moins en partie contre le cône (5.2) de la tête de serrage (5.0).

16. Dispositif selon l'une quelconque des revendications 7 à 15, **caractérisé en ce que**, lorsque l'outil de serrage (S) se trouve en position finale par-dessus l'articulation à rotule (K), la tige de la rotule (9) située en dehors du soufflet d'étanchéité (1) s'étend dans la cavité (7) de la douille (5.1) et une rainure (8.1) disposée sur le boîtier (8) dont elle fait le tour dans une direction radiale se situe dans le même plan que le bord (D2) côté boîtier du soufflet d'étanchéité.
